(19) **Europäisches Patentamt**
**European Patent Office**
**Office européen des brevets**

(11) **EP 2 171 226 B1**

(12) **EUROPEAN PATENT SPECIFICATION**

(45) Date of publication and mention of the grant of the patent:
**31.08.2011 Bulletin 2011/35**

(51) Int Cl.:
**F01N 3/021** (2006.01)    **F01N 9/00** (2006.01)
**F01N 11/00** (2006.01)    **F02D 41/14** (2006.01)

(21) Application number: **08776344.7**

(22) Date of filing: **10.07.2008**

(86) International application number:
**PCT/IB2008/001802**

(87) International publication number:
**WO 2009/007831 (15.01.2009 Gazette 2009/03)**

(54) **INTERNAL COMBUSTION ENGINE EXHAUST GAS CONTROL APPARATUS AND CONTROL METHOD THEREOF**

ABGASSTEUERUNGSVORRICHTUNG FÜR EINEN VERBRENNUNGSMOTOR UND STEUERVERFAHREN DAFÜR

APPAREIL DE CONTRÔLE DES GAZ D'ÉCHAPPEMENT D'UN MOTEUR À COMBUSTION INTERNE ET PROCÉDÉ DE CONTRÔLE DE CEUX-CI

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **11.07.2007 JP 2007182394**

(43) Date of publication of application:
**07.04.2010 Bulletin 2010/14**

(73) Proprietor: **Toyota Jidosha Kabushiki Kaisha Toyota-shi, Aichi 471-8571 (JP)**

(72) Inventors:
• **SHIBATA, Daisuke**
**Toyota-shi**
**Aichi 471-8571 (JP)**

• **IMAMURA, Shinichiro**
**Kariya-city**
**Aichi-Pref 448-8661 (JP)**

(74) Representative: **Intès, Didier Gérard André et al**
**Cabinet Beau de Loménie**
**158, rue de l'Université**
**75340 Paris Cedex 07 (FR)**

(56) References cited:
**JP-A- 5 044 439       JP-A- 2003 097 333**
**JP-A- 2005 337 782    JP-A- 2006 077 761**

**Description**

BACKGROUND OF THE INVENTION

1. Field of the Invention

The invention relates to an internal combustion engine exhaust gas control apparatus and a control method thereof. More particularly, the invention relates to technology for purifying particulate matter in exhaust gas.

2. Description of the Related Art

It is desirable to purify harmful gas components in exhaust gas produced by internal combustion engines used in automobiles and the like. More specifically, there is a need to purify particulate matter (hereinafter also referred to as "PM") such as soot and soluble organic fraction (SOF) in exhaust gas produced by compression ignition internal combustion engines, i.e., diesel engines. One technology for purifying such particulate matter includes providing a filter in an exhaust passage of an engine and trapping the PM in the exhaust gas with this filter. This filter is typically referred to as a particulate filter, of more specifically in the case of a diesel engine, a diesel particulate filter or DPF.

When a certain amount or more of PM is trapped in the filter, the trapping efficiency of the filter decreases dramatically. Therefore, the amount of PM that is trapped in the filter is estimated, and when that estimated amount exceeds a predetermined value, the filter is recovered by burning off the trapped PM.

Conventionally when determining when to recover the filter, i.e., when determining whether more than the predetermined amount of PM has accumulated on the filter, a differential pressure sensor is used to measure the pressure difference between upstream and downstream of the filter, and filter recovery is performed when the pressure difference exceeds a predetermined value. This uses the fact that as more PM accumulates, it becomes more difficult for exhaust gas to pass through the filter so the exhaust gas pressure upstream of the filter will become higher than the exhaust gas pressure downstream of the filter. Also, in recent years, technology has also been proposed which calculates the amount of PM that accumulates based on the engine operating conditions to more accurately ascertain the amount of PM that has accumulated (see Japanese Patent Application Publication No. 2006-77761 (JP-A-2006-77761), for example).

A typical method which measures the pressure difference as described above, however, requires that a separate exhaust passage be provided from upstream and downstream of the filter to the differential pressure sensor. This makes the structure of the exhaust passage complex and limits the degree of freedom in design.

SUMMARY OF THE INVENTION

This invention thus provides an internal combustion engine exhaust gas control apparatus, as well as a control method thereof, which is able to estimate the amount of PM trapped in a filter, and thus determine the timing at which to perform filter recovery, without complicating the structure of the exhaust passage.

A first aspect of the invention relates to an exhaust gas control apparatus for an internal combustion engine as defined by claim 1.

The inventors discovered through intense study that the output value of the oxygen concentration sensor changes according to the air-fuel ratio of the exhaust gas supplied to the oxygen concentration sensor and the amount of particulate matter accumulated on the oxygen concentration sensor. For example, when the air-fuel ratio of the exhaust gas supplied to the oxygen concentration sensor is constant, the output value of the oxygen concentration sensor gradually decreases as the amount of particulate matter accumulated on the oxygen concentration sensor increases. Meanwhile, there is a corresponding relationship between the amount of particulate matter accumulated on the oxygen concentration sensor and the amount of particulate matter trapped in the filter. Ultimately, the output of the oxygen concentration sensor decreases as the amount of particulate matter trapped in the filter increases. Therefore, the amount of particulate matter trapped in the filter can be estimated by monitoring the oxygen concentration sensor output under the same exhaust gas air-fuel ratio conditions. All this requires is that an upstream oxygen concentration sensor be arranged in the exhaust passage upstream of the filter, so there is no need to provide a separate exhaust passage. As a result, it is possible to keep the structure of the exhaust passage simple and not limit the degree of freedom in its design.

In the first aspect described above, the upstream oxygen concentration sensor may also include an exhaust gas side electrode and a porous body which covers the exhaust gas side electrode and on which particulate matter in the exhaust gas can accumulate. Further, the output of the upstream oxygen concentration sensor may change according to the amount of particulate matter in the exhaust gas accumulated on the porous body.

This structure utilizes the fact that the amount of particulate matter accumulated on the oxygen concentration sensor increases as the amount of particulate matter trapped in the filter increases, and the oxygen concentration sensor output value changes in response to this increase. Therefore, the structure of an oxygen concentration sensor that includes a porous body on which particulate matter in the exhaust gas can accumulate, like the structure described above, is extremely preferable for realizing the invention.

The upstream oxygen concentration sensor in the foregoing structure may include a heater for burning off particulate matter accumulated on the porous body.

This heater bums off the particulate matter accumulated on the porous body, thereby returning the upstream oxygen concentration sensor to its initial state in which no particulate matter is accumulated on it.

The exhaust gas control apparatus having any one of the structures described above includes a downstream oxygen concentration sensor provided in the exhaust passage downstream of the filter, and the estimating device estimates the amount of trapped particulate matter based also on an output of the downstream oxygen concentration sensor.

The inventors discovered through intense study that the output value of the oxygen concentration sensor changes according to both the air-fuel ratio and the pressure of the exhaust gas supplied to the oxygen concentration sensor. For example, when the air-fuel ratio of the exhaust gas supplied to the oxygen concentration sensor is constant, the output value of the oxygen concentration sensor gradually increases as the exhaust gas pressure increases. On the other hand, the differential pressure between upstream and downstream of the filter increases as the amount of particulate matter trapped in the filter increases. With the structure described above, the amount of particulate matter trapped in the filter can be estimated by using the upstream and downstream oxygen concentration sensors as pressure sensors and monitoring the differential pressure between upstream and downstream of the filter under the same exhaust gas air-fuel ratio conditions. Just as in the first aspect, it is not necessary to provide a separate exhaust passage so it is possible to keep the structure of the exhaust passage simple and not limit the degree of freedom in its design.

Incidentally, the exhaust gas pressure upstream of the filter increases as the amount of particulate matter trapped in the filter increases. Meanwhile, the output value of the upstream oxygen concentration sensor increases as the exhaust gas pressure upstream of the filter increases. Therefore, using this fact, the amount of particulate matter trapped in the filter can be estimated based on the first aspect. That is, the amount of particulate matter trapped in the filter can be estimated by monitoring the output value of the upstream oxygen concentration sensor under the same air-fuel ratio conditions.

Also, the upstream oxygen concentration sensor and the downstream oxygen concentration sensor in the structure described above may each include an exhaust gas side electrode and at least one of a pinhole and a porous body for determining the amount of oxygen to be transported to the exhaust gas side electrode, and the outputs may change according to the exhaust gas pressure.

The diameter of the pinhole is preferably at least 0.1 mm, and the porosity of the porous body is preferably at least 20%.

Also, the exhaust gas control apparatus having any one of the structures described above may also include a filter recovery controlling apparatus that executes a predetermined filter recovery control when the amount of particulate matter trapped in the filter estimated by the estimating device exceeds a predetermined amount.

As a result, the particulate matter accumulated on the filter can be burned off so the filter can be returned to its initial state in which no particulate matter is accumulated on it.

A second aspect which is not the claimed of invention relates to an exhaust gas control apparatus for an internal combustion engine. This exhaust gas control apparatus includes a filter which is provided in an exhaust passage of the internal combustion engine and traps particulate matter in exhaust gas; an upstream oxygen concentration sensor provided in the exhaust passage upstream of the filter; an air-fuel ratio estimating device that estimates an air-fuel ratio of the exhaust gas supplied to the upstream oxygen concentration sensor; a pressure change detecting device that detects a change in pressure upstream of the filter based on the exhaust gas air-fuel ratio estimated by the air-fuel ratio estimating device and an output of the upstream oxygen concentration sensor; and a filter abnormality detecting apparatus that detects an abnormality in the filter based on the change in pressure detected by the pressure change detecting device.

As described above, when the air-fuel ratio of the exhaust gas supplied to the oxygen concentration sensor is constant, the output of the oxygen concentration sensor changes according to a change in the exhaust gas pressure. Meanwhile, if an abnormality such as a crack occurs in the filter, the exhaust gas pressure upstream of the filter abruptly changes as a result. Therefore, an abnormality in the filter can be detected by detecting this change in the exhaust gas pressure using the upstream oxygen concentration sensor.

Further, the pressure change detecting device of this second aspect may also detect the change in pressure upstream of the filter based on the difference between a current value of the upstream oxygen concentration sensor output and a last value of the upstream oxygen concentration sensor output, and include a correcting device that corrects the last value to a value under the same air-fuel ratio conditions as the air-fuel ratio conditions for the current value.

The output value of the oxygen concentration sensor changes not only according to a change in the exhaust gas pressure, but also according to a change in the exhaust gas air-fuel ratio. According to this structure, correcting the last value eliminates the effect from a change in the exhaust gas air-fuel ratio, making it possible to detect only the change in the pressure. As a result, it is possible to appropriately detect an abnormality in the filter.

A third aspect which is not the claimed invention relates to an oxygen concentration sensor which detects an oxygen concentration in exhaust gas of an internal combustion engine. This oxygen concentration sensor includes an exhaust gas side electrode, and a porous body which covers the exhaust gas side electrode and on which particulate matter in the exhaust gas can accumulate. Also, an output of the oxygen concentration sensor changes according to the amount of particulate matter in the exhaust gas accumulated on the porous body.

Although there are some typical oxygen concentration sensors which have a porous body that covers the exhaust gas side electrode, that porous body normally does not allow particulate matter in the exhaust gas to accumulate on it in order to prevent the sensor output characteristics from changing due to the accumulation of particulate matter. However, the oxygen concentration sensor in this aspect conversely enables particulate matter in the exhaust gas to accumulate on the porous body and allows the output to change according to the amount of particulate matter that has accumulated on the porous body so that it is suitable for the first aspect and the like. Therefore, this third aspect can be recognized as an aspect of the invention that is in and of itself independent from, yet closely related to, the first aspect and the like.

A fourth aspect relates to a control method of an internal combustion engine exhaust gas control apparatus as defined by claim 8 according to the invention.

A fifth aspect which is not the claimed invention relates to another control method of an internal combustion engine exhaust gas control apparatus that includes a filter which is provided in an exhaust passage of the internal combustion engine and traps particulate matter in exhaust gas. This control method includes estimating an air-fuel ratio of the exhaust gas supplied to an upstream oxygen concentration sensor provided in the exhaust passage upstream of the filter, detecting a change in pressure upstream of the filter based on the estimated exhaust gas air-fuel ratio and an output of the upstream oxygen concentration sensor, and detecting an abnormality in the filter based on the detected change in pressure.

The aspects of the invention described above are extremely advantageous in that they enable the amount of particulate matter trapped in the filter to be estimated such that the filter recovering timing can be determined, without complicating the structure of the exhaust passage.

BRIEF DESCRIPTION OF THE DRAWINGS

The foregoing and further features and advantages of the invention will become apparent from the following description of example embodiments with reference to the accompanying drawings, wherein like numerals are used to represent like elements and wherein:

FIG 1 is a system view schematically showing an internal combustion engine according to an example embodiment of the invention;
FIG 2 is a graph showing the relationship among i) the air-fuel ratio of exhaust gas supplied to an oxygen concentration sensor, ii) the amount of PM accumulated on the oxygen concentration sensor, and iii) the output of the oxygen concentration sensor;
FIG. 3 is a full front view of a first structure of the oxygen concentration sensor;
FIG. 4 is a sectional view taken along line IV-IV in FIG 3;
FIG 5 is a graph showing the voltage-current characteristic (V-I characteristic) of the oxygen concentration sensor;
FIG 6 is a flowchart illustrating a first mode of a filter recovery routine;
FIG 7 is a flowchart illustrating a second mode of a filter recovery routine;
FIG. 8 is a view of a second structure of the oxygen concentration sensor, which corresponds to a cross-section taken along line IV-IV in FIG 3;
FIG 9 is a perspective view showing an entire third structure of the oxygen concentration sensor;
FIG 10 is a half sectional view of the third structure of the oxygen concentration sensor;
FIG. 11 is a system view schematically showing an internal combustion engine according to another mode related to the estimating the amount of PM trapped in a DPF;
FIG 12 is graph showing the relationship among i) the air-fuel ratio of exhaust gas supplied to the oxygen concentration sensor, ii) the pressure of exhaust gas supplied to the oxygen concentration sensor, and iii) the output of the oxygen concentration sensor;
FIG 13 is a full front view of a fourth structure of the oxygen concentration sensor;
FIG 14 is a sectional view taken along line XIV-XIV in FIG. 13;
FIG 15 is a sectional view of a fifth structure of the oxygen concentration sensor;
FIG 16 is a flowchart illustrating a third mode of a filter recovery routine;
FIG 17 is a flowchart illustrating a first mode of a DPF abnormality detection routine;
FIG. 18 flowchart illustrating a second mode of a DPF abnormality detection routine; and
FIG 19 graph showing the second mode of the DPF abnormality detection routine.

DETAILED DESCRIPTION OF THE EMBODIMENTS

Hereinafter, example embodiments of the invention will be described in detail with reference to the accompanying drawings.

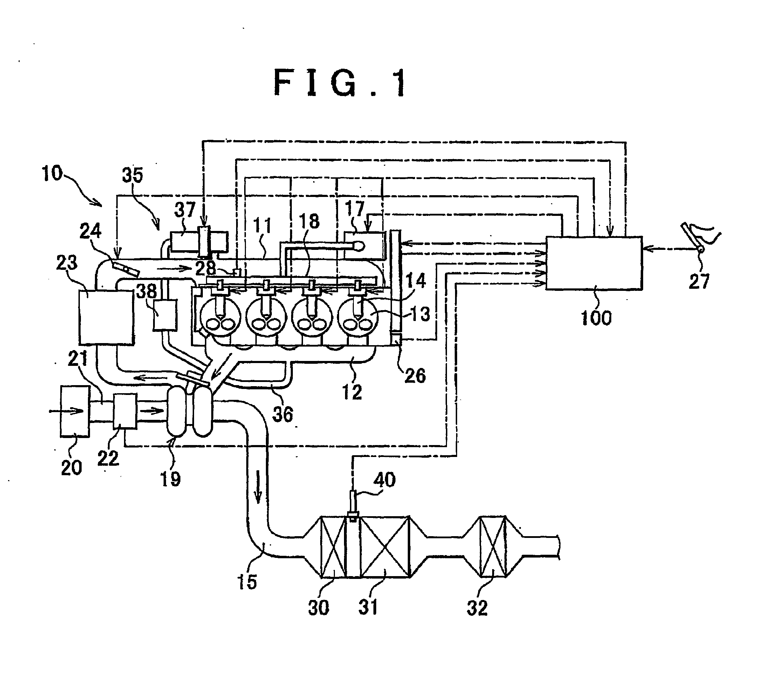

FIG. 1 is a system view schematically showing an internal combustion engine according to an example embodiment of the invention. As shown in the drawing, a vehicular compression ignition internal combustion engine, i.e., a diesel engine, (hereinafter also simply referred to as "engine") 10 includes an intake manifold 11 that is communicated with an intake port, an exhaust manifold 12 that is communicated with an exhaust port, and a combustion chamber 13. In this example embodiment, fuel supplied from a fuel tank, not shown, to a high pressure pump 17 is fed under pressure by the high pressure pump 17 to a common rail 18 where it is accumulated. The high pressure fuel in the common rail 18 is then directly injected into the combustion chamber 13 from an injector (i.e., fuel injection valve) 14. Exhaust gas produced by the engine 10 flows from the exhaust manifold 12 through a turbocharger 19 and into a downstream exhaust passage 15. The exhaust gas is then purified, which will be described later, before being discharged into the atmosphere. Incidentally, the diesel engine does not necessarily have to have a common rail fuel injection apparatus like that described above.

Intake air introduced into an intake passage 21 from an air cleaner 20 flows through an airflow meter 22, the turbocharger 19, an intercooler 23, and a throttle valve 24 and then into the intake manifold 11. The airflow meter 22 is a sensor for detecting the intake air amount. More specifically, the airflow meter 22 outputs a signal indicative of the flowrate of intake air (fresh air). The throttle valve 24 is electronically controlled.

A NO$_x$ catalyst 30, a diesel particulate filter (DPF) 31 serving as a filter, and an oxidation catalyst 32 are provided in that order from the upstream side in series in the exhaust passage 15 downstream of the turbocharger 19. The NO$_x$ catalyst 30 is used to purify the exhaust gas by reducing the NO$_x$ contained therein, and is formed of a NO$_x$ storage-reduction catalyst, for example. The NO$_x$ storage-reduction catalyst absorbs NO$_x$ in the exhaust gas during normal operation when the exhaust gas air-fuel ratio is lean, and releases the absorbed NO$_x$ when the exhaust gas air-fuel ratio is temporarily made rich from a rich spike executed by a post injection or the like. The released NO$_x$ reacts with HC in the exhaust gas, which serves as a reducing agent, and as a result, is reduced and removed. The oxidation catalyst 32 is used to purify the exhaust gas by oxidizing hydrocarbons and carbon monoxide (CO) (especially hydrocarbons), which are unburned components in the exhaust gas.

The DPF 31 is used to trap and remove particle matter (PM) in the exhaust gas, and can be any one of a variety of types of filters that physically trap PM, such as a so-called wall-flow type filter that blocks the openings on both ends of a honeycomb-shaped heat-resistant substrate in a alternating check pattern, or a foam-shaped filter with a mesh structure.

The engine 10 is also provided with an EGR (Exhaust Gas Recirculation) system 35 for recirculating some of the exhaust gas into the intake system. This EGR system 35 includes an EGR passage 36 that provides communication between the exhaust passage 15 (i.e., the exhaust manifold 12) and the intake passage 21 (i.e., the intake manifold 11), an EGR valve 37 provided in the EGR passage 36, and an EGR cooler 38 provided upstream of the EGR valve 37 in the EGR passage 36. The EGR valve 37 adjusts the flowrate of exhaust gas flowing through the EGR passage 36, i.e., the EGR gas that is recirculated from the exhaust system to the intake system. The EGR cooler 38 cools the EGR gas to increase the flowrate of EGR gas that is returned to the intake system.

An electronic control unit (hereinafter referred to as "ECU") 100 is provided as a control apparatus that performs overall engine control. The ECU 100 includes a CPU, ROM, RAM, input/output ports, and a storage device (i.e., a memory unit) and the like. The ECU 100 controls the injector 14, the high-pressure pump 17, the throttle valve 24, and the EGR valve 37 and the like based on, for example, the detected values from various sensors connected to the ECU 100 such that the desired engine control is executed. These sensors include a crank angle sensor 26 that detects the crank angle of the engine 10, an accelerator depression amount sensor 27 that detects the depression amount of an accelerator pedal, and a common rail pressure sensor 28 that detects the fuel pressure within the common rail 18 (i.e., the common rail pressure), in addition to the airflow meter 22 described above. The ECU 100 constantly calculates the speed of the engine 10 based on the output of the crank angle sensor 26.

The ECU 100 controls the quantity of fuel injected from the injector 14 (hereinafter simply referred to as the "fuel injection quantity") based on the operating state of the engine (i.e., mainly the engine speed and the accelerator depression amount). The ECU 100 also controls the EGR valve 37 and the throttle valve 24 so that the rate of EGR gas to the overall intake air comes to match a predetermined target EGR rate. In addition, the ECU 100 also controls the high-pressure pump 17 so that the actual common rail pressure detected by the common rail pressure sensor 28 comes to match a predetermined target common rail pressure.

An oxygen concentration sensor, i.e., an upstream oxygen concentration sensor 40, for detecting the oxygen concentration of the exhaust gas flowing into the DPF 31 is arranged upstream, or more specifically, immediately upstream, of the DPF 31 in the exhaust passage 15. This upstream oxygen concentration sensor 40 continuously outputs a variable current signal indicative of the oxygen concentration of the exhaust gas. The value of this current signal can be converted to an air-fuel ratio by the ECU 100. Incidentally, the oxygen concentration sensor is also referred to as an oxygen sensor or an air-fuel ratio sensor or the like. The output signal from the oxygen concentration sensor may also be a voltage signal instead of a current signal.

Other sensors may also be arranged in the exhaust passage 15 as appropriate. Examples of these sensors include an exhaust gas temperature sensor that detects the exhaust gas temperature, a NO$_x$ sensor that detects the NO$_x$ concentration of the exhaust gas, and an oxygen concentration sensor (a so-called O$_2$ sensor) that suddenly changes its output value when the air-fuel ratio crosses the stoichiometric air-fuel ratio.

In the foregoing system structure, when the amount of PM trapped by and accumulated on the DPF 31 exceeds a predetermined amount, the filter must be recovered by removing that PM so that the DPF 31 is able to trap more PM (i.e., so that the DPF 31 regains its ability to trap PM). Various methods for recovering the filter are known but in this example embodiment, a method in which the trapped PM is removed by being burned off by the DPF itself is used. That is, a catalyst of a precious metal such as platinum (Pt) is carried in the DPF. Once the trapped PM exceeds a predetermined amount, a post injection or the like is performed so that relatively rich exhaust gas is supplied to the DPF 31. As a result, the rich components (mainly HC) in the exhaust gas react with the catalyst and burn as a result, at which time the trapped PM also burns. Incidentally, the filter may also be recovered by other methods. For example, the trapped PM may be removed by being burned off using a heater provided separately.

In order to recover the filter efficiently, it is necessary to accurately determine when the amount of trapped PM in the DPF 31 exceeds the predetermined amount, and determine the appropriate period or timing at which to perform filter recovery. With related art, the differential pressure between upstream and downstream of the filter is measured with a differential pressure sensor and filter recovery is performed when this differential pressure reaches a predetermined value. However, this requires a separate exhaust passage running from upstream and downstream of the filter to the differential pressure sensor, which has drawbacks such as the fact that it makes the exhaust passage structure more complex.

Therefore, in this example embodiment, a differential pressure sensor is not used. Instead, the amount of PM trapped in the DPF 31 is estimated and used to determine the timing at which the filter is to be recovered. That is, the air-fuel ratio of the exhaust gas supplied to the upstream oxygen concentration sensor 40 is estimated, and the amount of PM trapped in the DPF 31 is estimated based on this estimated exhaust gas air-fuel ratio (hereinafter also referred to as the "estimated air-fuel ratio") A/Fe and the output of the upstream oxygen concentration sensor 40 (hereinafter also referred to as the "upstream sensor output") If. When the amount of trapped PM exceeds a predetermined amount, it is determined that it is time to recover the filter so the filter recovery control described below is executed. The upstream oxygen concentration sensor 40 is used to detect the amount of PM trapped in the DPF instead of being used to detect the normal air-fuel ratio.

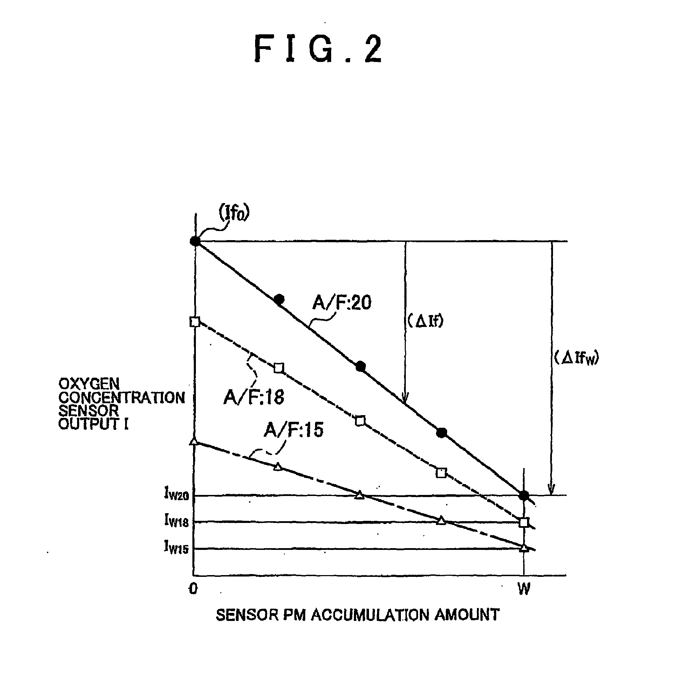

The inventors discovered through intense study that the output value of the oxygen concentration sensor changes according to the air-fuel ratio of the exhaust gas supplied to the oxygen concentration sensor and the amount of PM adhered to and accumulated on the oxygen concentration sensor. FIG. 2 shows the relationship among these three factors. As shown in the drawing, when the air-fuel ratio A/F of the exhaust gas supplied to the oxygen concentration sensor is constant, the output value I of the oxygen concentration sensor (shown by the vertical axis) gradually decreases as the amount of PM adhered to and accumulated on the oxygen concentration sensor (hereinafter also referred as the "sensor PM accumulation amount"; shown by the horizontal axis) increases. Meanwhile, there is a corresponding relationship or proportional relation between the amount of PM accumulated on the oxygen concentration sensor and the amount of PM trapped in the DPF. As a result, the output of the oxygen concentration sensor decreases as the amount of PM trapped in the DPF increases so the amount of PM trapped in the DPF can be estimated by monitoring the oxygen concentration sensor output under the same exhaust gas air-fuel ratio. When the amount of PM trapped in the DPF exceeds a predetermined value, it is determined that it is time to perform filter recovery. The output value of the oxygen concentration sensor, or the sensor PM accumulation amount corresponding to this output value, is an index value indicative of the amount of PM trapped in the DPF.

Accordingly, the upstream oxygen concentration sensor 40 only need be arranged in the exhaust passage. There is no need to provide a separate exhaust passage. This makes it possible to avoid making the exhaust passage structure complex and limiting the degree of freedom in its design.

The air-fuel ratio of the exhaust gas supplied to the oxygen concentration sensor may be estimated in the following way, for example, based on the operating state of the engine. That is, the ECU 100 determines the quantity Q of fuel to be injected (i.e., a fuel injection quantity Q) during the next fuel injection according to a predetermined map or the like, based on the engine speed NE detected based on the output of the crank angle sensor 26, and the accelerator depression amount Ac detected by the accelerator depression amount sensor 27. Then the ECU 100 calculates the ratio of the stored or commanded fuel injection quantity Q to the intake air amount Ga detected by the airflow meter 22, as the estimated air-fuel ratio A/Fe (i.e., A/Fe = Ga / Q).

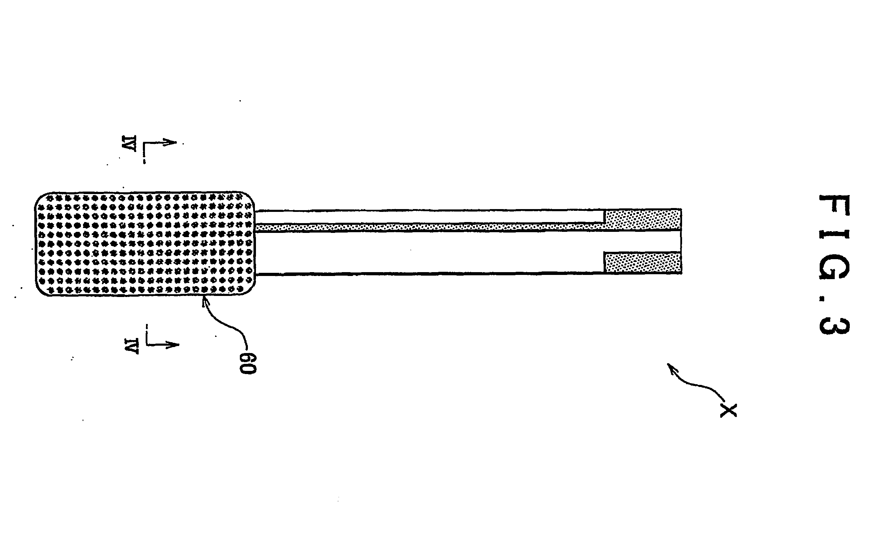

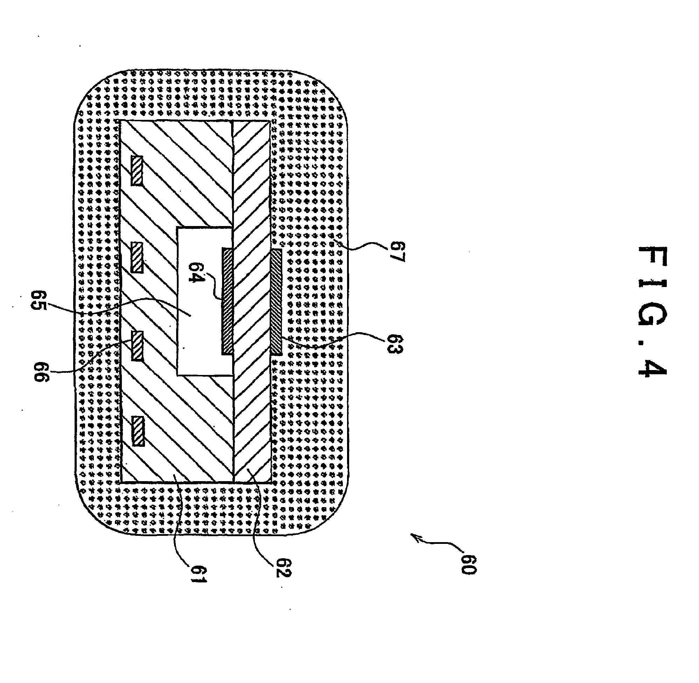

In this example embodiment, the structure of the oxygen concentration sensor has been designed so that the correlation between the amount of PM trapped in the DPF 31 and the output value of the oxygen concentration sensor is visible. FIGS. 3 and 4 show a first structure of the oxygen concentration sensor used as the upstream oxygen concentration sensor 40. The oxygen concentration sensor X is a so-called limiting current oxygen concentration sensor which has a sensor element 60 with a laminated structure. The entire sensor element 60 is housed in an element cover, not shown.

The sensor element 60 includes a plate-shaped solid electrolyte 62 affixed to an insulation layer 61, and a pair of electrodes 63 and 64 arranged opposing each other on the solid electrolyte 62. For example, the insulation layer 61 is made of a highly heat conductive ceramic such as alumina, and the solid electrolyte 62 is made of a partially-stabilized zirconia sheet. The electrodes 63 and 64 are made of platinum. An air chamber 65 is formed in a portion of the insulation layer 61 facing the electrode 64 on the inside, such that the electrode 64 is exposed to air. Thus the electrode 64 on the inside will be referred to as the air side electrode. A heater 66 is embedded in the insulation layer 61. This heater 66 is a wire heating element that generates heat when current is supplied from a battery. The heat generated by the heater 66 heats up the entire element.

A cover layer 67 that covers at least the electrode 63 on the outside, i.e., the exhaust gas side, is provided on the sensor element 60. In this example embodiment, the cover layer 67 covers not only the exhaust gas side electrode 63 but the entire element. The cover layer 67 is made of a porous body through which exhaust gas can flow and on which particulate matter in the exhaust gas can accumulate. This porous body is made of porous ceramic, for example. The PM in the exhaust gas gradually adheres to and accumulates on this cover layer 67.

When voltage is applied and current flows through both electrodes, with the air side electrode 64 as the positive electrode or cathode and the exhaust gas side electrode 63 as the negative electrode or anode, the electrochemical reaction $O_2 + 4e \rightarrow 2O^{2-}$ ... (1) takes place at the exhaust gas side electrode 63, resulting in oxygen ions being supplied to the solid electrolyte 62. Meanwhile, the reaction $2O^{2-} \rightarrow O_2 + 4e$ ... (2) takes place at the air side electrode 64, resulting in oxygen being released. This phenomenon is known as an oxygen pumping operation.

If the amount of oxygen that is transported is limited somewhere in the process of transporting the oxygen from the atmosphere of the sensor element 60 to the exhaust gas side electrode 63 where the reaction of Expression (1) above occurs, then a saturation current characteristic appears in the current-voltage characteristic of the electrolyte cell. This saturation current is referred to as the limiting current. The magnitude of this limiting current is basically determined by the oxygen concentration of the atmosphere. The limiting current oxygen concentration sensor supplies oxygen to the exhaust side electrode 63 through gas diffusion and outputs a limiting current that is proportional to the oxygen concentration.

With the oxygen concentration sensor 40 described above, oxygen gas diffusion of the cover layer 67, which is made of a porous body, controls the amount of oxygen transported to the exhaust gas side electrode 63. Then the flowrate of oxygen ions that flow through the solid electrolyte 62, i.e., the sensor output current, is almost entirely determined by the gas diffusion amount at the cover layer 67.

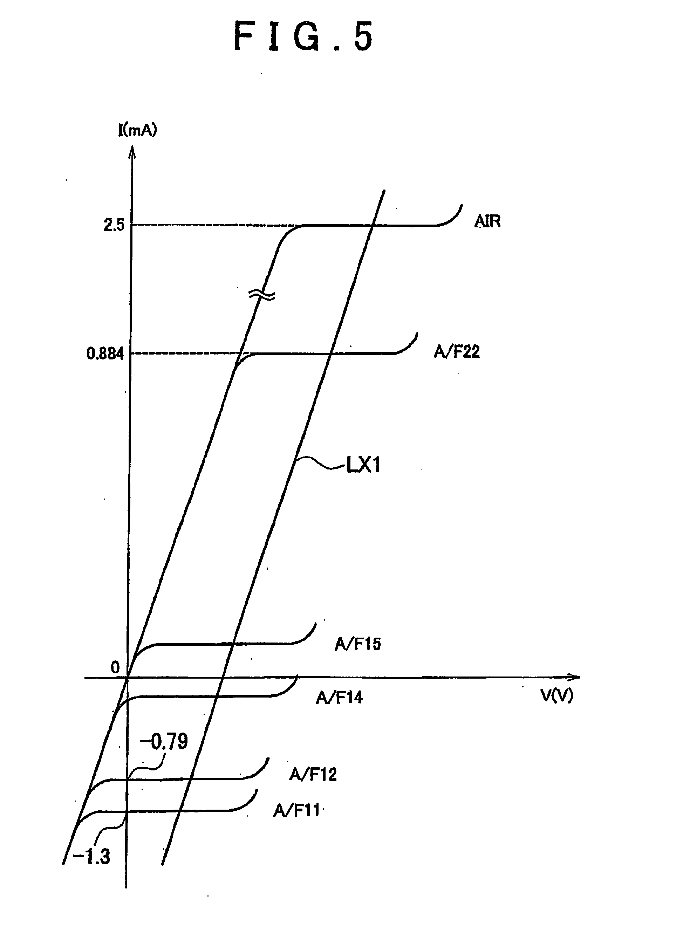

FIG. 5 is a graph showing the voltage-current characteristic (V-I characteristic) of the oxygen concentration sensor X. In the graph, the straight sections parallel to the V axis (i.e., the horizontal axis) correspond to limiting current regions that specify the sensor output current, i.e., the element current. An increase or decrease in this element current corresponds to the increase or decrease in the oxygen concentration in the exhaust gas, i.e., an increase or decrease in the exhaust gas air-fuel ratio. That is, as the exhaust gas air-fuel ratio becomes leaner, the element current increases, and as the exhaust gas air-fuel ratio becomes richer, the element current decreases. Incidentally, LX1 in the graph denotes the applied voltage straight line (applied voltage characteristic) for determining the voltage applied to the sensor element 60. The slope of this straight line is generally consistent with the region which are mostly controlled by resistance (i.e., the sloped portions on the low voltage side of the limiting current regions). In particular, in this example embodiment, the wide region from A/F 11 to AIR is the air-fuel ratio detection range. At A/F 11, the element current is -1.3 mA. At the stoichiometric air-fuel ratio (A/F = 14.6), the element current is approximately 0 mA, and in the atmospheric state (i.e., AIR), the element current is 2.5 mA.

Meanwhile, when PM in the exhaust gas accumulates on the cover layer 67, it impedes the ability of the cover layer 67 to diffuse oxygen gas, and as a result, the sensor output current indicative of the same air-fuel ratio decreases. That is, the sensor output current I may be expressed by Expression (3) below.

$$ I = \frac{4F}{RT} \bullet D \bullet \frac{S}{L} \bullet P \quad ... (3) $$

where F is a Faraday constant, R is a gas constant, T is the gas temperature, D is an oxygen diffusion coefficient in the cover layer, S is the electrode area, L is the thickness of the cover layer, and P is the oxygen concentration. When PM accumulates on the cover layer 67, the oxygen diffusion coefficient D decreases, and as a result, the sensor output current I decreases. Accordingly, a relationship such as that shown in FIG. 2 is established. Incidentally, when the amount of PM accumulated on the cover layer 67 increases, the substantive porosity of the cover layer 67 decreases.

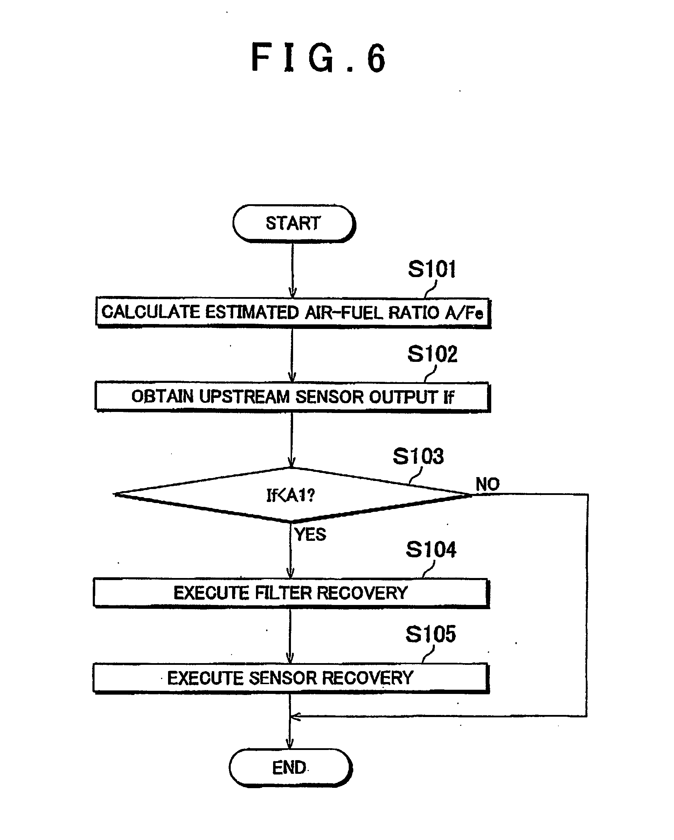

Next, a first mode of a filter recovery routine of the example embodiment will be described with respect to FIG. 6. The routine shown is repeatedly executed by the ECU 100 in predetermined cycles.

First, in step S101, the estimated value of the air-fuel ratio of the exhaust gas supplied to the upstream oxygen concentration sensor 40, i.e., the estimated air-fuel ratio A/Fe, is calculated based on the operating state of the engine, i.e., the fuel injection quantity Q and the intake air amount Ga (A/Fe = Ga / Q). Next, in step S102, the output current value If of the upstream oxygen concentration sensor 40 (i.e., the upstream sensor output If) is obtained.

Then in step S103, the obtained upstream sensor output If is compared with a predetermined threshold value A1. If the upstream sensor output If is equal to or greater than the threshold value A1, filter recovery is not necessary, i.e., it is estimated that the amount of PM trapped in the DPF 31 is equal to or less than a predetermined amount at which filter recovery becomes necessary (referred to as the "filter maximum trapping amount") so this cycle of the routine ends.

If, on the other hand, the upstream sensor output If is less than the threshold value A1, it is estimated that the amount of PM trapped in the DPF 31 exceeds the filter maximum trapping amount so the filter recovery control described above is executed in step S104 to recover the DPF 31. Then in step S105, sensor recovery control is executed to bum off the PM accumulated on the upstream oxygen concentration sensor 40, after which this cycle of the routine ends.

Referring back to FIG. 2, if the sensor PM accumulation amount corresponding to the filter maximum trapping amount is W (this will be referred to as the sensor maximum accumulation amount), then the sensor output values $I_{W20}$, $I_{W18}$, and $I_{W15}$ corresponding to this W each become the threshold value A1 that determines whether it is necessary to recover the filter. The threshold value A1 becomes a larger value as the value of the estimated air-fuel ratio A/Fe increases. For example, when the upstream sensor output If that is actually obtained when the estimated air-fuel ratio A/Fe equals 20 is equal to or greater to the threshold value A1 ($A1 = I_{W20}$) corresponding to that estimated air-fuel ratio, it is estimated that the amount of PM trapped in the DPF 31 is equal to or less than the filter maximum trapping amount so filter recovery is not performed. Conversely, when the upstream sensor output If is less than the threshold value A1 ($A1 = I_{W20}$), it is estimated that the amount of PM trapped in the DPF 31 exceeds the filter maximum trapping amount so filter recovery is performed.

In the sensor recovery control in step S105, the ECU 100 controls the heater 66 of the upstream oxygen concentration sensor 40 so that it generates heat. As a result, the PM adhered to and accumulated on the cover layer 67 of the upstream oxygen concentration sensor 40 is removed by being burned off so the upstream oxygen concentration sensor 40 also returns to its initial state in which no PM is adhered to it, just like the DPF 31.

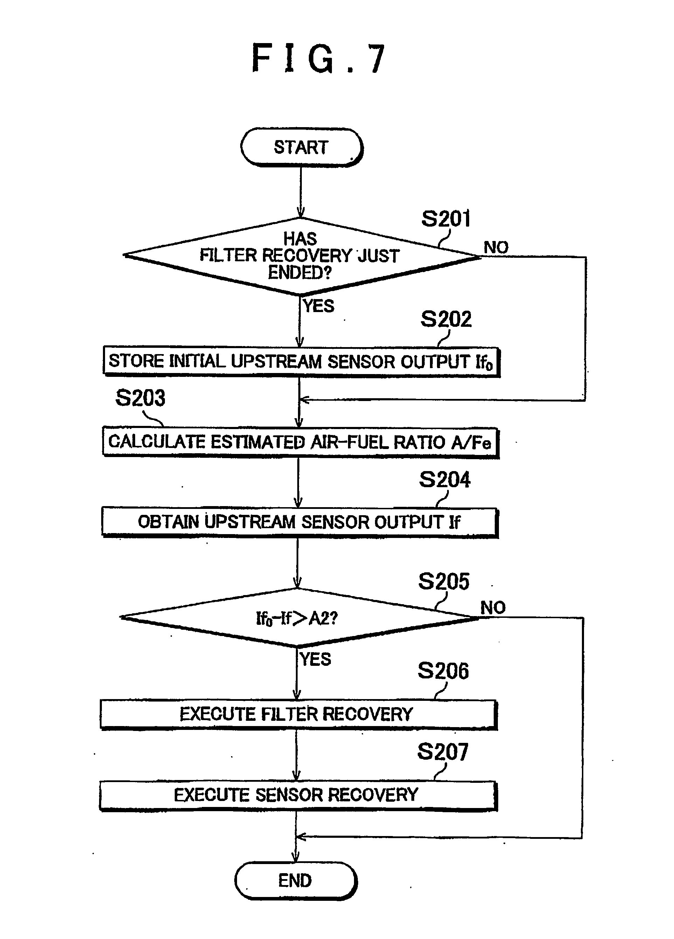

Next, a second mode of the filter recovery routine of this example embodiment will be described with reference to FIG 7. This routine is also repeatedly executed by the ECU 100 in predetermined cycles.

First, in step S201, it is determined whether filter recovery has just ended. For example, this determination is yes when it is within a relatively short predetermined period of time after filter recovery has ended.

When it is determined that filter recovery has just ended, the actual upstream sensor output If is stored in the ECU 100 as the initial upstream sensor output $If_0$ in step S202. This initial upstream sensor output $If_0$ is

the value when no PM has accumulated on the DPF 31 and the upstream oxygen concentration sensor 40. A plurality of different estimated air-fuel ratios A/Fe and the corresponding values of the initial upstream sensor output $If_0$ are stored in the ECU 100 as paired data before a predetermined period of time passes after the filter recovery has ended. If, on the other hand, it is determined in step S201 that the filter recovery has not just ended, step S202 is skipped.

In step S203, the value of the estimated air-fuel ratio A/Fe is calculated just as in step S101, and in step S204, the upstream sensor output If is obtained just as in step S 102.

Then in step S205, the value of the initial upstream sensor output $If_0$ for the same air-fuel ratio as the estimated air-fuel ratio A/Fe calculated in step S203 is read, and the difference between this initial upstream sensor output $If_0$ and the upstream sensor output If obtained in step S204, i.e., the sensor output difference $\Delta If$ ($= If_0 - If$) is obtained. This sensor output difference $\Delta If$ is then compared with a predetermined threshold value A2. If the sensor output difference $\Delta If$ is equal to or less than the threshold value A2, it is estimated that the amount of PM trapped in the DPF 31 is equal to or less than the filter maximum trapping amount so this cycle of the routine ends. If, on the other hand, the sensor output difference $\Delta If$ is greater than the threshold value A2, then it is estimated that the amount of PM trapped in the DPF 31 exceeds the filter maximum trapping amount so the filter recovery control is executed in step S206 just as in step S104, and the sensor recovery control is executed in step S207 just as in step S105, after which this cycle of the routine ends.

Referring back to FIG 2 again, when PM accumulates on the DPF 31 and the upstream oxygen concentration sensor 40, the upstream sensor output If gradually decreases from the initial upstream sensor output $If_0$ when the amount of accumulated PM is 0, so the sensor output difference $\Delta If$, which is $If_0 - If$, gradually increases. Therefore, the amount of accumulated on the DPF 31 can be estimated by this sensor output difference $\Delta If$. The sensor output difference $\Delta If_w$ at each air-fuel ratio with the sensor maximum accumulation amount W becomes the threshold value A2 of each air-fuel ratio. The slope of the upstream sensor output with respect to the sensor PM accumulation amount increases as the air-fuel ratio increases so the threshold value A2 becomes a larger value as the value of the estimated air-fuel ratio A/Fe increases. For example, when the difference between the upstream sensor output $If_{20}$ actually obtained when the estimated air-fuel ratio A/Fe equals 20 and the initial upstream sensor output $If_{020}$ at the same air-fuel ratio (i.e., $If_{020} - If_{20}$) is equal to or less than the threshold value A2 ($= If_{020} - If_{W20}$) corresponding to that estimated air-fuel ratio, it is estimated that the amount of PM trapped in the DPF 31 does not exceed the filter maximum trapping amount so filter recovery is not executed. Conversely, when the difference (i.e., $If_{020} - If_{20}$) is great-

er than the threshold value A2, it is estimated that the amount of PM trapped in the DPF 31 exceeds the filter maximum trapping amount so filter recovery is executed.

With this second mode, the filter PM trapping amount is estimated based on the difference from the initial upstream sensor output $If_0$ actually obtained when the amount of accumulated PM is 0. As a result, even if the output of the upstream oxygen concentration sensor 40 is off due to deterioration or the like, for example, the effect from this is eliminated so the amount of trapped PM can be accurately estimated.

Next, another structure of the oxygen concentration sensor suitable for estimating the filter PM trapping amount will be described.

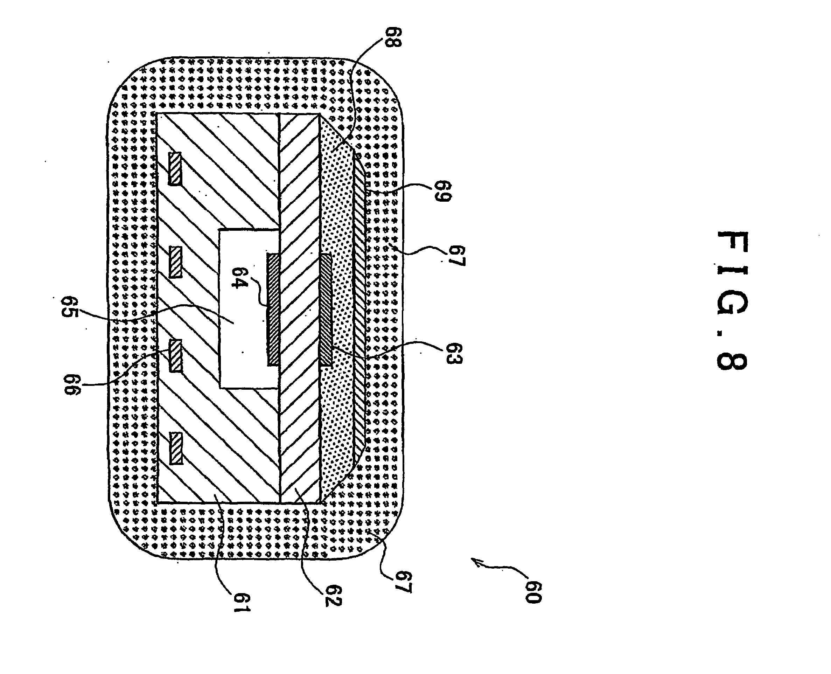

The second structure shown in FIG 8 is generally similar to the first structure shown in FIG. 4 so like elements will be denoted by like reference numerals in the drawing. With respect to the differences from the first structure, in the second structure shown in FIG. 8, the exhaust gas side electrode 63 and the upper surface of the solid electrolyte 62 on which the exhaust gas side electrode 63 is arranged are covered by a diffusion resistance layer 68 made of a porous body such as porous ceramic, and a shield layer 69 is laminated on top of the diffusion resistance layer 68. Then the entire element, including the diffusion resistance layer 68 and the shield layer 69, is covered by the cover layer 67. Both side portions of the diffusion resistance layer 68 and the shield layer 69 are chamfered or formed at an angle. The shield layer 69 is a dense layer that inhibits exhaust gas from passing through it, while the diffusion resistance layer 68 of course allows exhaust gas to pass through it. As a result, after passing through the cover layer 67, exhaust gas in the element atmosphere enters the diffusion resistance layer 68 from both side portions of the diffusion resistance layer 68, and passes through this diffusion resistance layer 68 to reach the exhaust gas side electrode 63. Both the cover layer 67 and the diffusion resistance layer 68 determine the amount of oxygen transported to the exhaust gas side electrode 63. However, the average pore diameter of the diffusion resistance layer 68 is smaller and the porosity of the diffusion resistance layer 68 is lower then the average pore diameter and the porosity of the cover layer 67 so PM can not accumulate on the diffusion resistance layer 68. The sensor output changes according to the amount of PM accumulated on the cover layer 67, just as in the first structure.

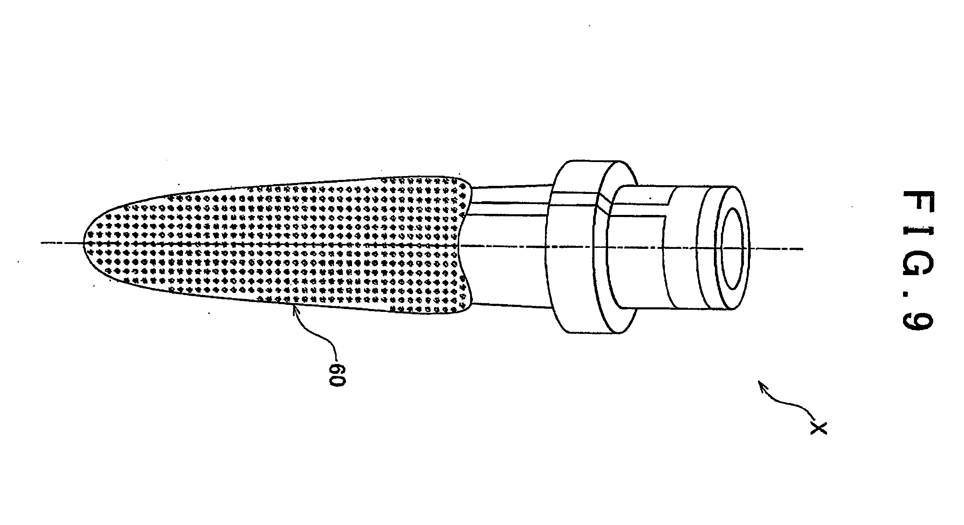

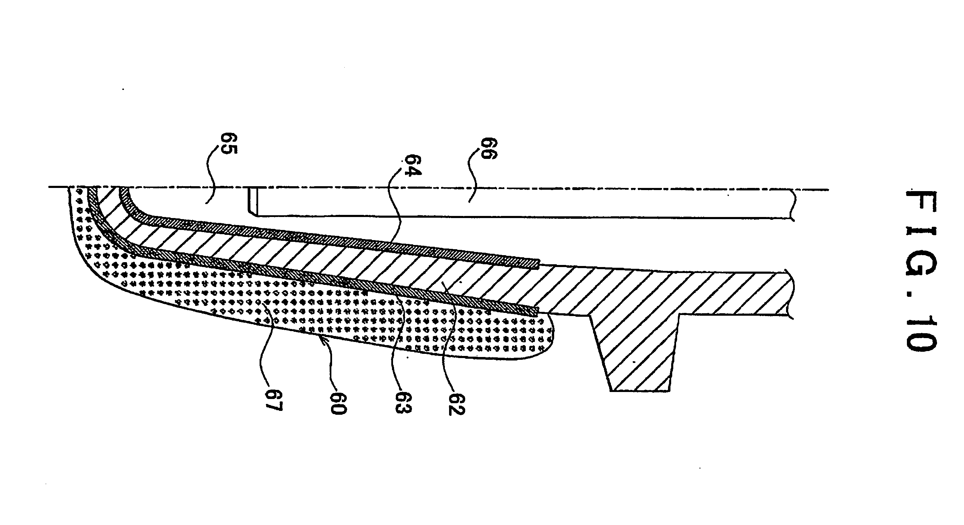

FIGS. 9 and 10 show a third structure. This third structure is a so-called cup-shaped structure which is cylindrical with the bottom portion of the solid electrolyte 62 to which the electrodes 63 and 64 are attached closed off. An air chamber 65 is formed to the inside of the solid electrolyte 62, and the air side electrode 64 is arranged on the inside of the solid electrolyte 62. The exhaust gas side electrode 63 is arranged on the outside of the solid electrolyte 62 and is entirely covered from the outside by the cover layer 67. Just as in the first structure, the sensor output changes according to the amount of PM accumulated on the cover layer 67.

Incidentally, the upstream oxygen concentration sensor 40 can also be used to detect the normal air-fuel ratio. Therefore, the upstream oxygen concentration sensor 40 can be used both to estimate the amount of PM trapped in the DPF and detect the air-fuel ratio.

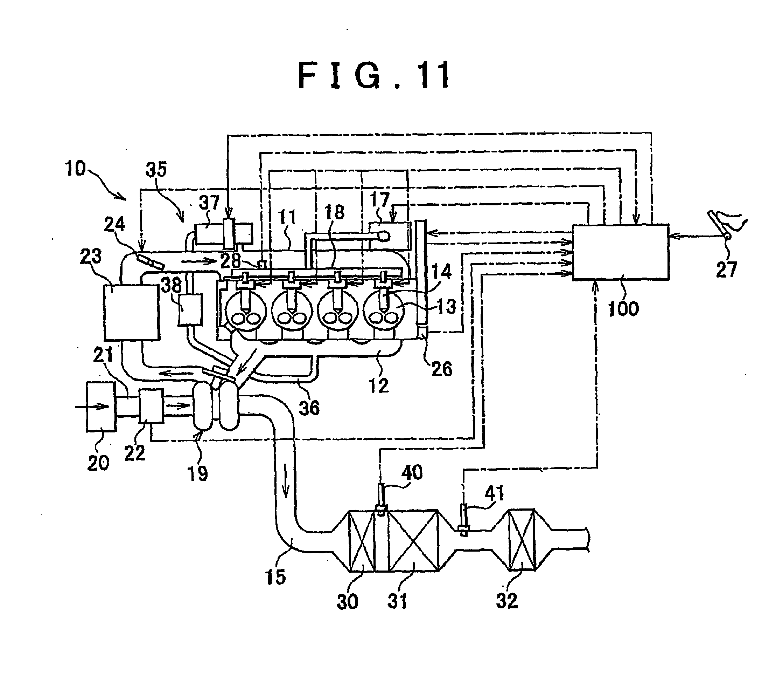

Next, another mode related to estimating the amount of PM trapped in the DPF will be described. In this other mode, an oxygen concentration sensor for detecting the oxygen concentration of the exhaust gas flowing out of the DPF 31, i.e., a downstream oxygen concentration sensor 41, is also provided in the exhaust passage 15 downstream, or more specifically, immediately downstream, of the DPF 31, as shown in FIG 11. The downstream oxygen concentration sensor 41 has the same structure as the upstream oxygen concentration sensor 40. The other structure is the same as it is in the foregoing mode shown in FIG 1.

In this other mode, the air-fuel ratio A/Fe of the exhaust gas supplied to the upstream oxygen concentration sensor 40 is estimated, and the amount of PM trapped in the DPF 31 is estimated based on this estimated air-fuel ratio A/Fe, the output If from the upstream oxygen concentration sensor 40 (i.e., the upstream sensor output If), and the output Ir of the downstream oxygen concentration sensor 41 (i.e., the downstream sensor output Ir). When the amount of trapped PM exceeds a predetermined value, it is determined that it is time to recover the filter so filter recovery control is executed.

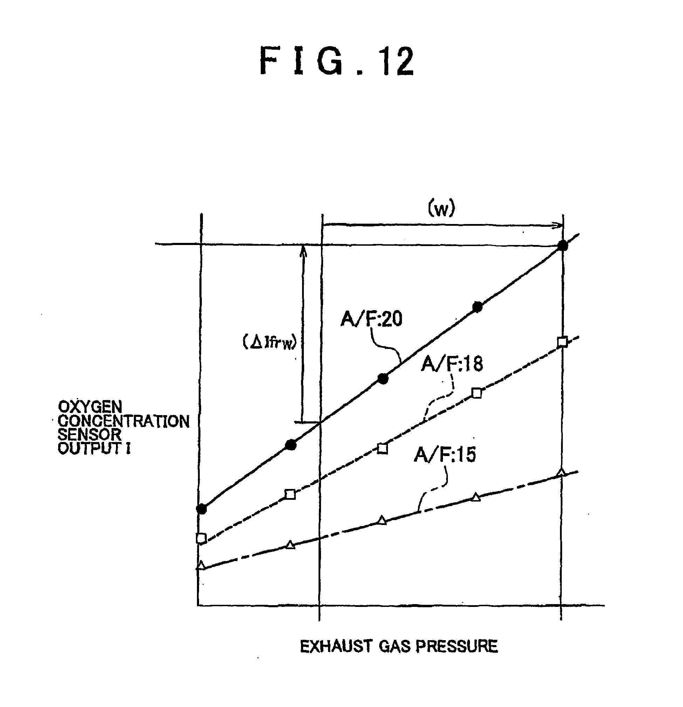

The inventors discovered through intense study that the output value of the oxygen concentration sensor changes according to the air-fuel ratio of the exhaust gas supplied to the oxygen concentration sensor and the pressure of the exhaust gas supplied to the oxygen concentration sensor. FIG 12 shows the relationship among these three factors. As shown in the drawing, when the air-fuel ratio A/F of the exhaust gas supplied to the oxygen concentration sensor is constant, the output value of the oxygen concentration sensor (shown by the vertical axis) gradually increases as the exhaust gas pressure (shown by the horizontal axis) increases. Meanwhile, the pressure upstream of the DPF and the differential pressure between upstream and downstream of the DPF increase as the amount of PM trapped in the DPF increases. Accordingly, the amount of PM trapped in the DPF can be estimated by monitoring the differential pressure between downstream and upstream of the DPF under the same air-fuel ratio conditions using the upstream and downstream oxygen concentration sensors 40 and 41 as pressure sensors. When the amount of PM trapped in the DPF exceeds the predetermined value, it is determined that it is time to recover the filter. The differential pressure according to the upstream and downstream oxygen concentration sensors 40 and 41, or the difference in the exhaust gas pressures corresponding to the output values, is an index value indicative of the amount of PM trapped in the DPF.

Oxygen concentration sensors having not only the first, second, and third structures, but also fourth and fifth structures described below can also be suitably used with this other mode.

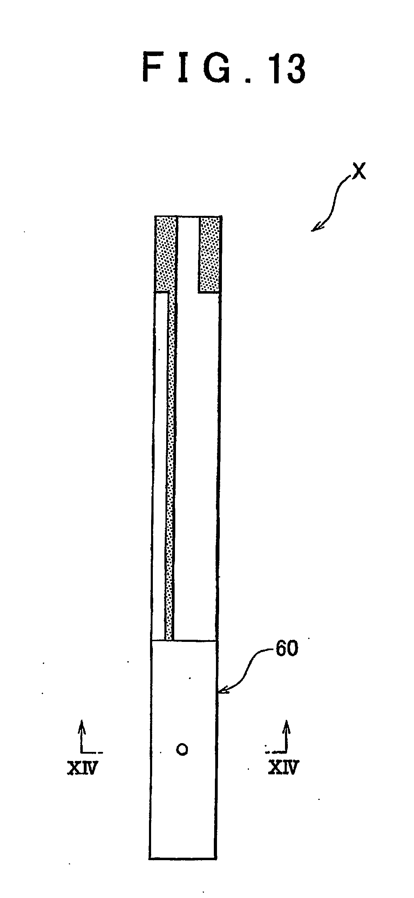

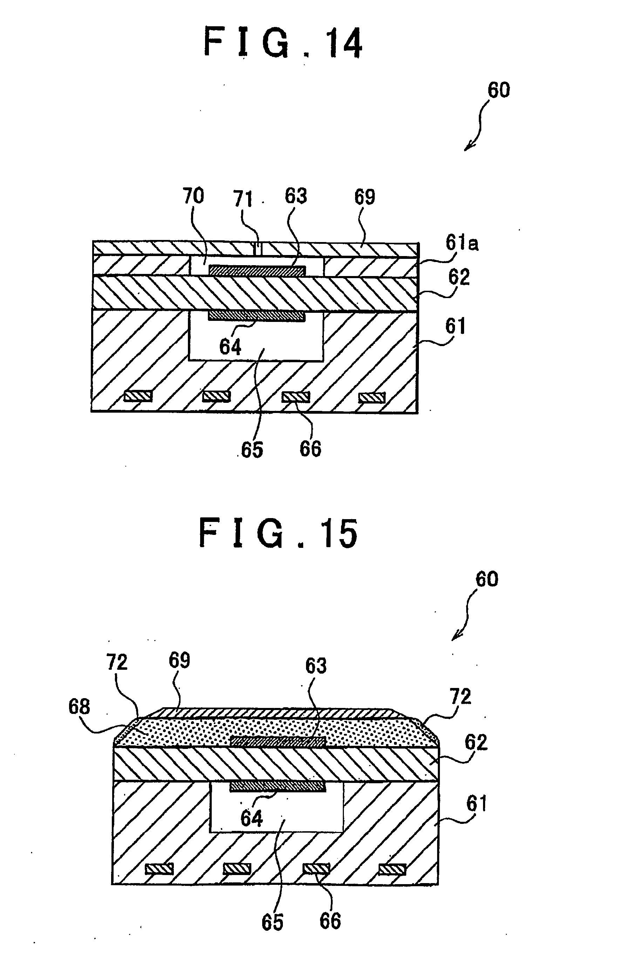

In the fourth structure shown in FIGS. 13 and 14, the exhaust gas side electrode 63 of the sensor element 60 is made of a porous body but is not covered. Instead, the exhaust gas side electrode 63 is housed in an exhaust gas chamber 70. This exhaust gas chamber 70 is defined by an insulation layer 61a provided on the solid electrolyte 62, and the shield layer 69 provided on this insulation layer 61a. A pinhole (i.e., a tiny hole) 71 is formed in the shield layer 69. The element atmosphere and the exhaust gas chamber 70 are communicated only by this pinhole 71. In this fourth structure, the pinhole 71 determines the amount of oxygen that is transported to the exhaust gas side electrode 63. All other portions are the same as they are in the structure described above.

FIG. 15 shows the fifth structure which is generally similar to the second structure shown in FIG 8, with the differences being that the cover layer 67 made of a porous body is not provided, and a poison trapping layer 72 is provided on both side portions as an exhaust gas introducing portion of the diffusion resistance layer 68 made of a porous body. This poison trapping layer 72 is a layer that traps mainly grain growth material such as silicon and glass components in oil. The poison trapping layer 72 has essentially no affect on the amount of oxygen transported and the oxygen gas diffusion to the exhaust gas side electrode 63.

As described above, the sensor output current I may be expressed by Expression (3) below.

$$ I = \frac{4F}{RT} \bullet D \bullet \frac{S}{L} \bullet P \quad ... (3) $$

Here, the oxygen diffusion coefficient D depends on the gas diffusion path. In the fourth structure, the oxygen diffusion coefficient D depends on the molecule transfer mechanism in the pinhole 71. In the fifth structure, the oxygen diffusion coefficient D depends on the molecular transfer mechanism in the diffusion resistance layer 68. When the diameter d of the pinhole is sufficiently large with respect to the mean free path of an oxygen molecule $1_{02}$ (e.g., 0.049 mm) (i.e., d >> 20 $1_{02}$ as a guide), the diffusion in this kind of pinhole is such that the probability of collision between two molecules is significantly greater than the probability of collision between a molecule and the inner wall of the pinhole (i.e., the molecular diffusion area). Because the oxygen diffusion coefficient D at this time is proportional to the pressure, the oxygen concentration sensor output changes in proportion to the exhaust gas pressure. From this viewpoint, in order to have molecular diffusion be dominant, the diameter d of the pinhole is preferably at least 0.1 mm in the fourth structure, and the porosity of the diffusion resistance layer 68 is preferably at least 20% in the fifth structure. Incidentally, in the first, second, and third structures, the porosity of both the cover layer 67 and the diffusion resistance layer 68 is preferably at least 20%.

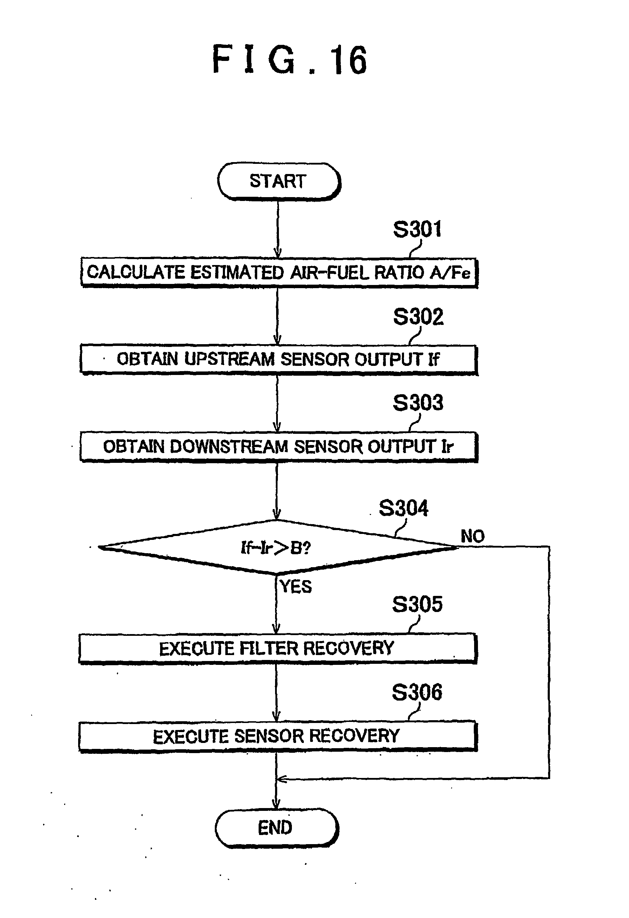

Next, a third mode of the filter recovery routine related to this other mode will be described with reference to FIG. 16. The routine shown is repeatedly executed by the ECU 100 in predetermined cycles.

First, in step S301, the value of the estimated air-fuel ratio A/Fe is calculated as it is in step S101. Next, in step S302, the upstream sensor output If is obtained as it is in step S102. Then in step S303, the downstream sensor output Ir is obtained.

After this, in step S304, the difference between the obtained upstream sensor output If and the obtained downstream sensor output Ir, i.e., the upstream/downstream sensor output difference ΔIfr (If - Ir), is calculated and then compared with a predetermined threshold value B. If the upstream/downstream sensor output difference ΔIfr is equal to or less than the threshold value B, it is estimated that the amount of PM trapped in the DPF 31 does not exceed the filter maximum trapping amount so this cycle of the routine ends. If, on the other hand, the upstream/downstream sensor output difference ΔIfr is greater than the threshold value B, it is estimated that the amount of PM trapped in the DPF 31 exceeds the filter maximum trapping amount so the filter recovery control is executed in step S305 just as in step S104, and the sensor recovery control is executed in step S306 just as in step S105, after which this cycle of the routine ends.

Referring back to FIG 12, as PM accumulates on the DPF 31, the exhaust gas pressure upstream of the DPF 31 rises, and as a result, the upstream/downstream sensor output difference ΔIfr (= If - Ir) gradually increases. Therefore, the amount of PM trapped by the DPF 31 can be estimated by this upstream/downstream sensor output difference ΔIfr. The upstream/downstream sensor output difference $ΔIfr_w$ of each air-fuel ratio, which corresponds to the DPF upstream/downstream pressure difference W when the amount of trapped PM matches the filter maximum trapping amount, becomes the threshold value B at each air-fuel ratio. The slope of the sensor output with respect to the exhaust pressure increases as the air-fuel ratio becomes larger so the threshold value B becomes a larger value as the value of the estimated air-fuel ratio A/Fe increases. For example, when the difference between the upstream sensor output If and the downstream sensor output Ir actually obtained when the estimated air-fuel ratio A/Fe equals 20 (i.e., $If_{20} - Ir_{20}$) is equal to or less than the threshold value B (B = $ΔIfr_{w20}$) corresponding to that estimated air-fuel ratio, it is estimated that the amount of PM trapped in the DPF 31 is equal to or less than the filter maximum trapping amount so filter recovery is not executed. Conversely, when the difference (i.e., $If_{20} - Ir_{20}$) is greater than the threshold value B, it is estimated that the amount of PM trapped in the DPF 31 exceeds filter maximum trapping amount so filter recovery is executed.

In this other mode as well, the upstream and downstream oxygen concentration sensors 40 and 41 only need to be arranged in the exhaust passage so there is no need to add a separate exhaust passage. As a result, it is possible to avoid making the structure of the exhaust passage complex and limiting the degree of freedom in its design.

In this other mode, the differential pressure between upstream and downstream of the DPF 31 is measured using the oxygen concentration sensor as a pressure sensor. However, it is also possible to detect abnormalities such as cracks in the DPF 31 in close connection with this technology, so this will be described below.

If an abnormality such as a crack occurs in a portion of the DPF 31, the exhaust gas pressure upstream of the DPF 31 will abruptly change at the time the abnormality occurs. More specifically, the exhaust gas pressure will abruptly decrease when the abnormality occurs (i.e., the exhaust gas pressure will suddenly be lower after the abnormality has occurred than it was before the abnormality occurred). Therefore, an abnormality in the DPF 31 can be detected by detecting this abrupt change (i.e., decrease) with the upstream oxygen concentration sensor 40 that is upstream of the DPF 31.

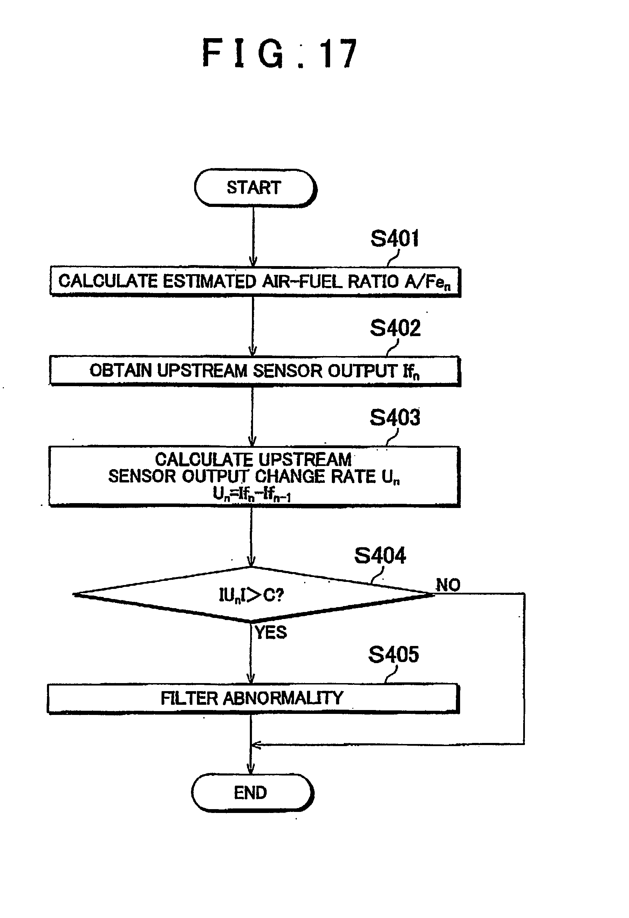

FIG 17 is a flowchart illustrating a first mode of a DPF abnormality detection routine. The routine shown is repeatedly executed by the ECU 100 in predetermined cycles. This first mode is executed when the exhaust gas air-fuel ratio is steady, i.e., substantially constant, such as when the engine is operating steadily.

First, in step S401, the value of the estimated air-fuel ratio $A/Fe_n$ at the timing at which this cycle (n) of the routine is executed, i.e., the current estimated air-fuel ratio $A/Fe_n$, is calculated. Then in step S402, the upstream sensor output $If_n$ at the timing at which this cycle of the routine is executed, i.e., the current upstream sensor output $If_n$, is obtained.

In step S403, the difference between the upstream sensor output of the last cycle (n-1) and the upstream sensor output of this cycle, i.e., the upstream sensor output change rate $U_n$ (= $If_n$ - $If_{n-1}$) of the current cycle, is calculated. Then, in step S404, the absolute value of this upstream sensor output change rate $U_n$ is compared with a predetermined threshold value C (> 0).

If the absolute value of the upstream sensor output change rate $U_n$ is equal to or less than the threshold value C, it is determined that an abnormality such as a crack has not occurred in the DPF 31, and this cycle of the routine directly ends. If, on the other hand, the absolute value of the upstream sensor output change rate $U_n$ is greater than the threshold value C, then it is determined in step S405 that an abnormality such as a crack has occurred in the DPF 31 and this cycle of the routine ends. Incidentally, if it is determined in step S405 that an abnormality has occurred, it is preferable to activate a warning device or the like to alert the user of the abnormality.

When the pressure upstream of the DPF 31 drops as a result of a crack in the DPF 31, the upstream sensor output decreases, as is evident from FIG. 12. Therefore, when the amount of this decrease is greater than a predetermined value, it can be determined that there is a crack in the DPF 31. Here, the amount that the upstream sensor output decreases when a crack occurs in the DPF 31 differs depending on the exhaust gas air-fuel ratio at that time. Therefore, different values for different air-fuel ratios are set in advance for the threshold value C, and the threshold value C is set to a larger value as the air-fuel ratio increases. The threshold value C for the same air-fuel ratio as the estimated air-fuel ratio A/Fe calculated in step S401 is used in step S404.

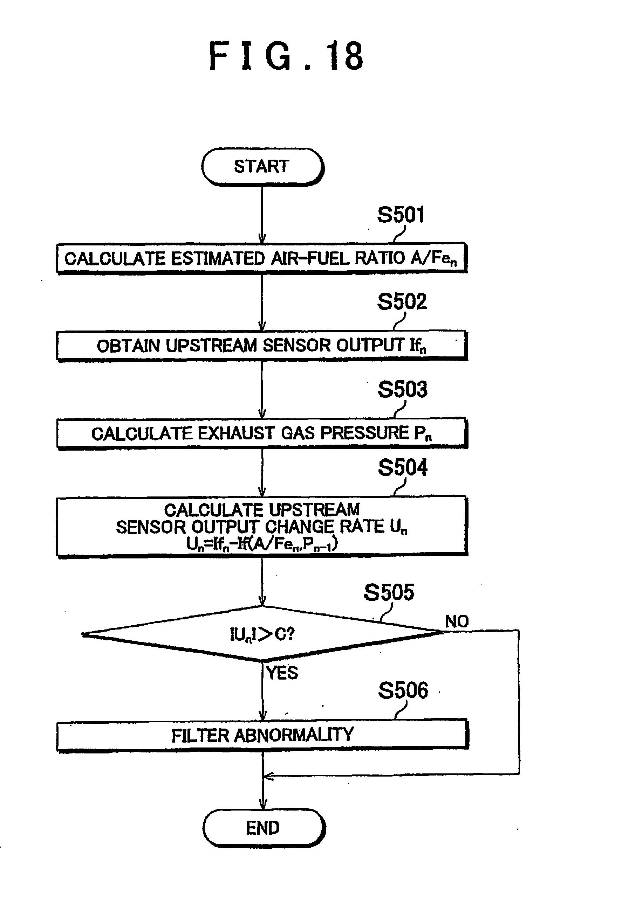

FIG 18 is a flowchart illustrating a second mode of a DPF abnormality detection routine. The routine shown is repeatedly executed by the ECU 100 in predetermined cycles. This second mode extracts and detects only the amount of decrease in the pressure upstream of the DPF, and thus eliminates any effects caused by a change in the exhaust gas air-fuel ratio that may occur as a result of a change in the operating state of the engine.

First, in step S501, the value of the estimated air-fuel ratio $A/Fe_n$ at the timing at which this cycle (n) of the routine is executed, i.e., the current estimated air-fuel ratio $A/Fe_n$, is calculated just as in step S401. Then in step S502, the upstream sensor output $If_n$ at the timing at which this cycle of the routine is executed, i.e., the current upstream sensor output $If_n$, is obtained just as in step S402.

Then in step S503, the exhaust gas pressure $P_n$ at the timing at which this cycle of the routine is executed, i.e., the current exhaust gas pressure $P_n$, is calculated. That is, a map that defines a relationship, such as that shown in FIG. 12, is stored in the ECU 100 in advance. The ECU 100 calculates the exhaust gas pressure $P_n$ corresponding to the current estimated air-fuel ratio $A/Fe_n$ and the current upstream sensor output $If_n$ based on these, from the map.

Then in step S504, the current upstream sensor output change rate $U_n$ is calculated. However, the method for calculating the upstream sensor output change rate $U_n$ is different in this second mode. In this second mode, the upstream sensor output change rate $U_n$ is calculated according to Expression (4) below.

$$U_n = If_n - If(A/Fe_n, P_{n-1}) \dots (4)$$

where $If(A/Fe_n, P_{n-1})$ refers to the upstream sensor output value on a map corresponding to the current estimated air-fuel ratio $A/Fe_n$ and the last exhaust gas pressure $P_{n-1}$.

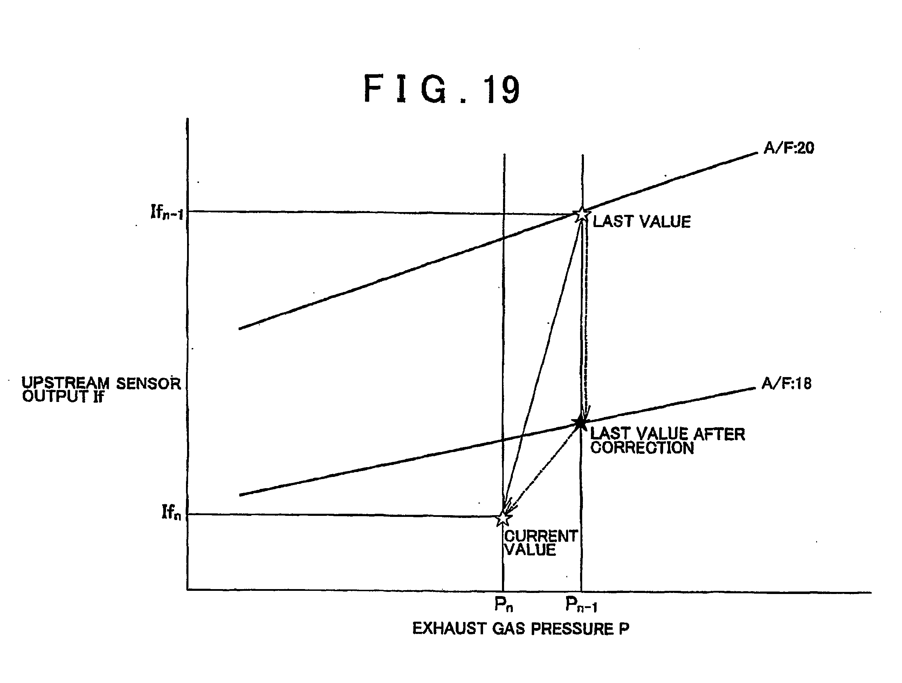

This will be described with reference to FIG. 19. In this example, the last upstream sensor output $If_{n-1}$ is a value when the estimated air-fuel ratio $A/Fe_{n-1}$ equals 20 and the exhaust gas pressure is $P_{n-1}$, and the current upstream sensor output $If_n$ is a value when the estimated air-fuel ratio $A/Fe_n$ equals 18 and the exhaust gas pressure is $P_n$, as shown by the white stars in the graph. $If_n$ is less than $If_{n-1}$, and $P_n$ is less than $P_{n-1}$. From this, it seems that the current upstream sensor output $If_n$ decreases much more than the last upstream sensor output $If_{n-1}$ and thus there may appear to be a crack in the DPF 31. However, this decrease amount also includes the amount of change (i.e., decrease) in the air-fuel ratio. Accordingly, the upstream last sensor output value is corrected to exclude this amount of change in the air-fuel ratio. That is, the upstream sensor output value $If (A/Fe_n, P_{n-1})$ at the same exhaust gas pressure as the last exhaust gas pressure $P_{n-1}$ and the same air-fuel ratio as the current estimated air-fuel ratio $A/Fe_n$ is obtained (shown by the black star in the graph). Therefore, the last upstream sensor output value can be corrected by the amount of change in the air-fuel ratio. As a result, just the amount of change in the upstream sensor output value, which excludes the amount of change in the air-fuel ratio, can be obtained by obtaining the difference between the current estimated air-fuel ratio $A/Fe_n$ and the last upstream sensor output value $If (A/Fe_n, P_{n-1})$ after the correction.

Incidentally, this example illustrates a case in which the air-fuel ratio and the exhaust gas pressure decrease. However, just the amount of change in the upstream sensor output value can similarly be obtained in both a case in which the air-fuel ratio increases and a case in which the exhaust gas pressure increases. Incidentally, an abnormality in which the exhaust gas pressure increases may be the result of a part in the exhaust system upstream of the DPF failing and a broken piece clogging the DPF, for example.

When the current upstream sensor output change rate $U_n$ is calculated in this way, the absolute value of the upstream sensor output change rate $U_n$ is compared to a predetermined threshold value C (> 0) in step S505 just as in step S404. This threshold value C can be the same as the value used in the first mode. If the absolute value of the upstream sensor output change rate $U_n$ is equal to or less than the threshold value C, it is determined that an abnormality such as a crack has not occurred in the DPF 31 and this cycle of the routine ends. If, on the other hand, the absolute value of the upstream sensor output change rate $U_n$ is greater than the threshold value C, then it is determined in step S506 that an abnormality such as a crack has occurred in the DPF 31, and this cycle of the routine ends.

In this way, in this second mode, the last upstream sensor output value is corrected by the amount of change in the air-fuel ratio so it is possible to detect only the amount of change in the pressure upstream of the DPF excluding the effect from the change in the air-fuel ratio. Accordingly, even if the operating state of the engine changes, an abnormality in the DPF can be suitably detected, thereby ensuring a large number of detection opportunities without limiting that number.

Although various example embodiments of the invention have been described above, other embodiments are also possible. For example, in the foregoing example embodiments, the internal combustion engine is a compression ignition internal combustion engine. However, in recent years there have been examples of particulate matter in exhaust gas produced by spark ignition internal combustion engines. In this case, the invention may also be applied to spark ignition internal combustion engines. Also, in the example embodiments described above, the filter PM trapping amount when it is time to recover the filter is estimated. However, the invention may also be applied to estimating a filter PM trapping amount which is a medium amount before it is time to recover the filter.

While the invention has been described with reference to example embodiments thereof, it is to be understood that the invention is not limited to the example embodiments or constructions. To the contrary, the invention is intended to cover various modifications and equivalent arrangements. In addition, while the various elements of the example embodiments are shown in various combinations and configurations, which are exemplary, other combinations and configurations, including more, less or only a single element, are also within the spirit and scope of the invention.

**Claims**

1. An exhaust gas control apparatus for an internal combustion engine (10), **characterized by** comprising:

   a filter (31) which is provided in an exhaust passage (15) of the internal combustion engine and traps a particulate matter in an exhaust gas;
   an upstream oxygen concentration sensor (40) provided in the exhaust passage upstream of the filter;
   said exhaust gas control apparatus being **characterized by** further comprising: a downstream oxygen concentration sensor (41) provided in the exhaust passage downstream of the filter;
   an air-fuel ratio estimating device (100) that estimates an air-fuel ratio (A/Fe) of the exhaust gas supplied to the upstream oxygen concentration sensor; and
   an estimating device (100) that estimates an amount of the particulate matter (PM) trapped in the filter based on the air-fuel ratio of the exhaust gas estimated by the air-fuel ratio estimating device, an output of the upstream oxygen concentration sensor, and an output of the downstream oxygen concentration sensor.

2. The exhaust gas control apparatus according to claim 1, wherein the upstream oxygen concentration sensor includes an exhaust gas side electrode (63) and a porous body which covers the exhaust gas side electrode and on which the particulate matter in the exhaust gas can accumulate, the output of the upstream oxygen concentration sensor changing according to the amount of the particulate matter in the exhaust gas accumulated on the porous body.

3. The exhaust gas control apparatus according to claim 2, wherein the upstream oxygen concentration sensor (40) includes a heater (66) for burning off the particulate matter accumulated on the porous body.

4. The exhaust gas control apparatus according to any one of claims 1 to 3, wherein the upstream oxygen concentration sensor (40) and the downstream oxygen concentration sensor (41) each include an exhaust gas side electrode (63) and at least one of a pinhole (71) and a porous body for determining the amount of oxygen to be transported to the exhaust gas side electrode, and the outputs change according to an exhaust gas pressure.

5. The exhaust gas control apparatus according to any one of claims 1 to 4, wherein the estimating device (100) estimates the amount of the particulate matter trapped in the filter (31) by monitoring a differential pressure between the exhaust passage (15) upstream of the filter and the exhaust passage downstream of the filter, based on the output of the upstream oxygen concentration sensor (40) and the output of the downstream oxygen concentration sensor (41).

6. The exhaust gas control apparatus according to any one of claims 1 to 5, further comprising:

a filter recovery controlling apparatus (100) that executes a predetermined filter recovery control when the amount of the particulate matter trapped in the filter estimated by the estimating device exceeds a predetermined amount.

7. The exhaust gas control apparatus according to claim 6, wherein the estimating device (100) a) stores a plurality of different estimated air-fuel ratios (A/Fe) estimated by the air-fuel ratio estimating device together with corresponding initial outputs of the upstream oxygen concentration sensor (40), a respective one of the estimated air-fuel ratios being stored together with a respective one of the initial outputs, before a predetermined period of time passes after the filter recovery control has ended, and b) estimates the amount of the particulate matter trapped in the filter based on the difference between the output (If) of the upstream oxygen concentration sensor and the initial output (Ifo) of the upstream oxygen concentration sensor.

8. A control method of an exhaust gas control apparatus for an internal combustion engine that includes a filter (31) which is provided in an exhaust passage of the internal combustion engine and traps a particulate matter in an exhaust gas, the control method being **characterized by** comprising:

estimating an air-fuel ratio (A/Fe) of the exhaust gas supplied to an upstream oxygen concentration sensor (40) provided in the exhaust passage upstream of the filter; and
estimating an amount of the particulate matter trapped in the filter based on an estimated air-fuel ratio of the exhaust gas, an output of the upstream oxygen concentration sensor, and an output of a downstream oxygen concentration sensor (41) provided in the exhaust passage downstream of the filter.

**Patentansprüche**

1. Abgassteuerungsvorrichtung für eine Verbrennungskraftmaschine (10), **dadurch gekennzeichnet, daß** sie umfaßt:

einen Filter (31), der in einem Abgaskanal (15) der Verbrennungskraftmaschine vorgesehen ist und die in dem Abgas enthaltenen Feststoffteilchen auffängt,
einen stromauf gelegenen Sauerstoffkonzentrationssensor (40), der in dem Abgaskanal stromauf des Filters vorgesehen ist,
wobei die Abgassteuerungsvorrichtung **dadurch gekennzeichnet ist, daß** sie außerdem umfaßt:

einen stromab gelegenen Sauerstoffkonzentrationssensor (41), der in dem Abgaskanal stromab des Filters vorgesehen ist, und
eine Luft-Kraftstoffverhältnis-Schätzvorrichtung (100), die ein Luft-Kraftstoffverhältnis (A/Fe) des dem stromauf gelegenen Sauerstoffkonzentrationssensor zugeführten Abgases schätzt, und
eine Schätzvorrichtung (100), die eine Menge der in dem Filter aufgefangenen Feststoffteilchen (PM), bezogen auf das von der Luft-Kraftstoffverhältnis-Schätzvorrichtung geschätzte Luft-Kraftstoffverhältnis des Abgases, einen Ausgangswert des stromauf gelegenen Sauerstoffkonzentrationssensors und einen Ausgangswert des stromab gelegenen Sauerstoffkonzentrationssensors schätzt.

2. Abgassteuerungsvorrichtung nach Anspruch 1, wobei der stromauf gelegene Sauerstoffkonzentrationssensor eine abgasseitige Elektrode (63) und einen porösen Körper umfaßt, der die abgasseitige Elektrode beckt und auf dem sich die in dem Abgas enthaltenen Feststoffteilchen sammeln können, wobei sich der Ausgangswert des stromauf gelegenen Sauerstoffkonzentrationssensors gemäß der Menge der in dem Abgas enthaltenen, auf dem porösen Körper angesammelten Feststoffteilchen ändert.

3. Abgassteuerungsvorrichtung nach Anspruch 2, wobei der stromauf gelegene Sauerstoffkonzentrationssensor (40) ein Heizelement (66) zum Verbrennen der auf dem porösen Körper angesammelten Feststoffteilchen umfaßt.

4. Abgassteuerungsvorrichtung nach einem der Ansprüche 1 bis 3, wobei der stromauf gelegene Sauerstoffkonzentrationssensor (40) und der stromab gelegene Sauerstoffkonzentrationssensor (41) jeweils eine abgasseitige Elektrode (63) und mindestens eines von einer nadelfeinen Öffnung (71) und einem porösen Körper zum Bestimmen der zu der abgasseitigen Elektrode zu transportierenden Sauerstoffmenge umfaßt und sich die Ausgangswerte gemäß einem Abgasdruck ändern.

5. Abgassteuerungsvorrichtung nach einem der Ansprüche 1 bis 4, wobei die Schätzvorrichtung (100) die Menge der in dem Filter (31) aufgefangenen Feststoffteilchen durch Überwachung einer Druckdifferenz zwischen dem Abgaskanal (15) stromauf des Filters und dem Abgaskanal stromab des Filters schätzt, bezogen auf den Ausgangswert des stromauf gelegenen Sauerstoffkonzentrationssensors (40) und den Ausgangswert des stromab gelegenen Sauerstoffkonzentrationssensors (41).

6. Abgassteuerungsvorrichtung nach einem der Ansprüche 1 bis 5, außerdem umfassend:

eine Filterregenerations-Steuervorrichtung (100), die eine vorgegebene Filterregenerationssteuerung ausführt, wenn die Menge der von der Schätzvorrichtung geschätzten, in dem Filter aufgefangenen Feststoffteilchen eine vorgegebene Menge übersteigt.

7. Abgassteuerungsvorrichtung nach Anspruch 6, wobei die Schätzvorrichtung (100) a) mehrere verschiedene, geschätzte Luft-Kraftstoffverhältnisse (A/Fe) speichert, die von der Luft-Kraftstoffverhältnis-Schätzvorrichtung zusammen mit entsprechenden, anfänglichen Ausgangswerten des stromauf gelegenen Sauerstoffkonzentrationssensors (40) geschätzt wurden, wobei ein jeweiliges von den geschätzten Luft-Kraftstoffverhältnissen zusammen mit einem jeweiligen von den anfänglichen Ausgangswerten gespeichert wird, bevor ein vorgegebener Zeitraum nach der Beendigung der Filterregenerationssteuerung vergeht, und b) die Menge der in dem Filter aufgefangenen Feststoffteilchen schätzt, bezogen auf die Differenz zwischen dem Ausgangswert (If) des stromauf gelegenen Sauerstoffkonzentrationssensors (40) und dem anfänglichen Ausgangswert (Ifo) des stromauf gelegenen Sauerstoffkonzentrationssensors.

8. Steuerungsverfahren für eine Abgassteuerungsvorrichtung für eine Verbrennungskraftmaschine, die einen Filter (31) umfaßt, der in einem Abgaskanal der Verbrennungskraftmaschine vorgesehen ist und die in einem Abgas enthaltenen Feststoffteilchen auffängt, wobei das Steuerungsverfahren **dadurch gekennzeichnet ist, daß** es umfaßt:

Schätzen eines Luft-Kraftstoffverhältnisses (A/Fe) des Abgases, das einem stromauf gelegenen Sauerstoffkonzentrationssensor (40) zugeführt wird, der in dem Abgaskanal stromauf des Filters vorgesehen ist, und
Schätzen einer Menge der in dem Filter aufgefangenen Feststoffteilchen, bezogen auf ein geschätztes Luft-Kraftstoffverhältnis des Abgases, einen Ausgangswert des stromauf gelegenen Sauerstoffkonzentrationssensors und einen Ausgangswert des stromab gelegenen Sauerstoffkonzentrationssensors (41), der in dem Abgaskanal stromab des Filters vorgesehen ist.

## Revendications

1. Dispositif de commande de gaz d'échappement pour un moteur à combustion interne (10), **caractérisé en ce qu'**il comprend :

un filtre (31) qui est prévu dans un passage d'échappement (15) du moteur à combustion interne et qui piège une matière particulaire dans un gaz d'échappement ;
un capteur de concentration d'oxygène en amont (40) prévu dans le passage d'échappement en amont du filtre ;
ledit dispositif de commande de gaz d'échappement étant **caractérisé en ce qu'**il comprend en outre :

un capteur de concentration d'oxygène en aval (41) prévu dans le passage d'échappement en aval du filtre ;
un dispositif d'estimation de rapport air-carburant (100) qui estime un rapport air-carburant (A/Fe) du gaz d'échappement fourni au capteur de concentration d'oxygène en amont ; et

un dispositif d'estimation (100) qui estime une quantité de la matière particulaire (MP) piégée dans le filtre sur la base du rapport air-carburant du gaz d'échappement estimé par le dispositif d'estimation de rapport air-carburant, d'une sortie du capteur de concentration d'oxygène en amont et d'une sortie du capteur de concentration d'oxygène en aval.

2. Dispositif de commande de gaz d'échappement selon la revendication 1, dans lequel le capteur de concentration d'oxygène en amont comprend une électrode côté gaz d'échappement (63) et un corps poreux qui recouvre l'électrode côté gaz d'échappement et sur lequel la matière particulaire dans le gaz d'échappement peut s'accumuler, la sortie du capteur de concentration d'oxygène en amont variant en fonction de la quantité de la matière particulaire dans le gaz d'échappement accumulée sur le corps poreux.

3. Dispositif de commande de gaz d'échappement selon la revendication 2, dans lequel le capteur de concentration d'oxygène en amont (40) comprend un élément chauffant (66) pour brûler la matière particulaire accumulée sur le corps poreux.

4. Dispositif de commande de gaz d'échappement selon l'une quelconque des revendications 1 à 3, dans lequel le capteur de concentration d'oxygène en amont (40) et le capteur de concentration d'oxygène en aval (41) comprennent chacun une électrode côté gaz d'échappement (63) et au moins l'un d'un trou d'épingle (71) et d'un corps poreux pour déterminer la quantité d'oxygène à transporter vers l'électrode côté gaz d'échappement, et les sorties varient en fonction d'une pression de gaz d'échappement.

5. Dispositif de commande de gaz d'échappement selon l'une quelconque des revendications 1 à 4, dans lequel le dispositif d'estimation (100) estime la quantité de la matière particulaire piégée dans le filtre (31) en surveillant une pression différentielle entre le passage d'échappement (15) en amont du filtre et le passage d'échappement en aval du filtre, sur la base de la sortie du capteur de concentration d'oxygène en amont (40) et de la sortie du capteur de concentration d'oxygène en aval (41).

6. Dispositif de commande de gaz d'échappement selon l'une quelconque des revendications 1 à 5, comprenant en outre :

un dispositif de commande de régénération de filtre (100) qui exécute une commande de régénération de filtre prédéterminée lorsque la quantité de la matière particulaire piégée dans le filtre estimée par le dispositif d'estimation dépasse une quantité prédéterminée.

7. Dispositif de commande de gaz d'échappement selon la revendication 6, dans lequel le dispositif d'estimation (100) a) mémorise une pluralité de rapports air-carburant (A/Fe) estimés différents qui sont estimés par le dispositif d'estimation de rapport air-carburant avec les sorties initiales correspondantes du capteur de concentration d'oxygène en amont (40), un rapport respectif parmi les rapports air-carburant estimés étant mémorisé avec une sortie respective parmi les sorties initiales, avant qu'une période de temps prédéterminée se soit écoulée après la fin de la commande de régénération de filtre, et b) estime la quantité de la matière particulaire piégée dans le filtre sur la base de la différence entre la sortie (If) du capteur de concentration d'oxygène en amont et la sortie initiale (Ifo) du capteur de concentration d'oxygène en amont.

8. Procédé de commande d'un dispositif de commande de gaz d'échappement pour un moteur à combustion interne qui comprend un filtre (31) qui est prévu dans un passage d'échappement du moteur à combustion interne et qui piège une matière particulaire dans un gaz d'échappement, le procédé de commande étant **caractérisé en ce qu'**il consiste à :

estimer un rapport air-carburant (A/Fe) du gaz d'échappement fourni à un capteur de concentration d'oxygène en amont (40) prévu dans le passage d'échappement en amont du filtre ; et estimer une quantité de la matière particulaire piégée dans le filtre sur la base d'un rapport air-carburant estimé du gaz d'échappement, d'une sortie du capteur de concentration d'oxygène en amont et d'une sortie d'un capteur de concentration d'oxygène en aval (41) prévu dans le passage d'échappement en aval du filtre.

FIG. 1

# FIG.2

# FIG.3

X

60

IV

IV

# F I G . 4

# FIG.5

# FIG.6

```
        ┌──────────────┐
        │    START     │
        └──────┬───────┘
               │            S101
               ▼
┌─────────────────────────────────────┐
│ CALCULATE ESTIMATED AIR-FUEL RATIO A/Fe │
└─────────────────┬───────────────────┘
                  │         S102
                  ▼
┌─────────────────────────────────────┐
│    OBTAIN UPSTREAM SENSOR OUTPUT If   │
└─────────────────┬───────────────────┘
                  │
                  ▼         S103
             ◇──────────◇      NO
              ◇ If<A1? ◇ ────────────┐
               ◇──────◇               │
                  │ YES               │
                  ▼         S104       │
        ┌─────────────────────┐       │
        │ EXECUTE FILTER RECOVERY │    │
        └──────────┬──────────┘       │
                   │        S105        │
                   ▼                    │
        ┌─────────────────────┐       │
        │ EXECUTE SENSOR RECOVERY │    │
        └──────────┬──────────┘       │
                   │◄───────────────────┘
                   ▼
            ┌──────────┐
            │   END    │
            └──────────┘
```

# F I G . 7

```
          START

            │
            ▼
                                    S201
         HAS                          NO
  FILTER RECOVERY JUST ─────────────────┐
        ENDED?                          │
            │                           │
          YES          S202             │
            ▼                           │
  STORE INITIAL UPSTREAM SENSOR OUTPUT If₀  │
            │                           │
  S203      │                           │
            ▼                           │
  CALCULATE ESTIMATED AIR-FUEL RATIO A/Fe   │
            │                           │
            │          S204             │
            ▼                           │
  OBTAIN UPSTREAM SENSOR OUTPUT If       │
            │                           │
            │                           │
            ▼          S205             │
                                   NO   │
         If₀-If>A2? ──────────────────┐ │
            │                        │ │
          YES          S206          │ │
            ▼                        │ │
    EXECUTE FILTER RECOVERY          │ │
            │                        │ │
            │          S207          │ │
            ▼                        │ │
    EXECUTE SENSOR RECOVERY          │ │
            │                        │ │
            ▼◄───────────────────────┘ │
            ◄───────────────────────────┘
            │
            ▼
          END
```

# F I G . 8

# FIG.9

# F I G . 10

FIG.11

# FIG.12

# F I G . 13

X

60

XIV

XIV

# FIG.14

60

70    71    63    69

61a

62

61

64

65    66

# FIG.15

60

72    69    63    72

68

62

61

64

65    66

# FIG.16

START

S301

CALCULATE ESTIMATED AIR-FUEL RATIO A/Fe

S302

OBTAIN UPSTREAM SENSOR OUTPUT If

S303

OBTAIN DOWNSTREAM SENSOR OUTPUT Ir

S304

If-Ir＞B?　　NO

YES

S305

EXECUTE FILTER RECOVERY

S306

EXECUTE SENSOR RECOVERY

END

# FIG.17

START

**S401**

CALCULATE ESTIMATED AIR-FUEL RATIO $A/Fe_n$

**S402**

OBTAIN UPSTREAM SENSOR OUTPUT $If_n$

**S403**

CALCULATE UPSTREAM SENSOR OUTPUT CHANGE RATE $U_n$
$U_n = If_n - If_{n-1}$

**S404**

$|U_n| > C?$ — NO

YES

**S405**

FILTER ABNORMALITY

END

# F I G . 18

START

$S501$

CALCULATE ESTIMATED AIR-FUEL RATIO $A/Fe_n$

$S502$

OBTAIN UPSTREAM SENSOR OUTPUT $If_n$

$S503$

CALCULATE EXHAUST GAS PRESSURE $P_n$

$S504$

CALCULATE UPSTREAM
SENSOR OUTPUT CHANGE RATE $U_n$
$U_n = If_n - If(A/Fe_n, P_{n-1})$

$S505$

$|U_n| > C?$     NO

YES

$S506$

FILTER ABNORMALITY

END

# FIG.19

EP 2 171 226 B1

**EP 2 171 226 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006077761 A